# EUROPÄISCHE PATENTSCHRIFT

(11) **EP 2 042 352 B1**
(45) Veröffentlichungstag und Bekanntmachung des Hinweises auf die Patenterteilung: **15.09.2010**
(21) Anmeldenummer: 08159221.4
(22) Anmeldetag: 27.06.2008
(51) Int. Cl.: B60D 1/36

(54) **Vorrichtung und Verfahren zum Ankuppeln eines Anhängers an ein landwirtschaftliches Zugfahrzeug**
Method and device for coupling a trailer onto an agricultural tractor
Dispositif et procédé d'accouplement d'une remorque sur un véhicule de traction agricole

(30) Priorität: 27.09.2007 DE 102007046677
(43) Veröffentlichungstag der Anmeldung: 01.04.2009
(73) Patentinhaber: CLAAS Selbstfahrende Erntemaschinen GmbH, 33428 Harsewinkel (DE)
(72) Erfinder: Brüggemann, Daniel, 33442 Herzebrock (DE); Hartmann, Ralf, 49324 Melle (DE); Pela, Jaroslaw, 33803 Steinhagen (DE); Weiß, Stefan, 59510 Lippetal (DE)

(56) Entgegenhaltungen:
- WO-A-96/25298
- DE-A1-102004 059 596
- DE-C2- 4 413 694
- GB-A- 2 351 717
- US-A- 5 191 328

## Beschreibung

Die Erfindung betrifft eine Vorrichtung und ein Verfahren zum Ankuppeln eines Anhängers an insbesondere eine landwirtschaftliche Arbeitsmaschine, und vorzugsweise eine landwirtschaftliche Erntemaschine. Dabei umfasst eine solche landwirtschaftliche Arbeitsmaschine bzw. eine Erntemaschine in der Regel eine Karosserie, einen Antrieb für eines oder mehrere Räder, sowie eine Lenkeinrichtung zum Steuern der Arbeitsmaschine und eine Kuppelvorrichtung, um einen Anhänger daran anzukoppeln.

Bei Erntemaschinen werden die Schneidwerke, insbesondere von Mähdreschern, aber beispielsweise auch von Feldhäckslern, zum Transport auf der Straße auf sogenannten Schneidwerkswagen, die auch als Transportwagen bezeichnet werden, abgelegt, da die Schneidwerke aufgrund ihrer erheblichen Breite sich in der Arbeitsposition nicht für den Transport auf der Straße eignen.

Für den Fahrer der Erntemaschine besteht nun immer wieder das Problem, dass er beim Ankuppeln des Anhängers bzw. Transportwagens aufgrund der Größe der Erntemaschine die Deichsel des Transportwagens nicht einsehen kann, da der Fahrer keinen oder nur einen eingeschränkten direkten Blickkontakt zum Anhänger hat. Somit ist zum Ankuppeln eine Hilfsperson erforderlich, die den Fahrer einweist, um Unfälle oder Schäden an der Erntemaschine oder dem Anhänger zu vermeiden. Insbesondere nach Beendigung eines Ernteeinsatzes steht eine Hilfsperson aber nicht immer auf dem Feld zur Verfügung, sodass der Fahrer der Erntemaschine sehr umständlich nach dem Trial-and-Error-Prinzip regelmäßig mehrere Versuche benötigt, um den Ankuppelvorgang erfolgreich zu meistern. Dabei muss er jeweils das Führerhaus verlassen, um die Maschine herumgehen und das Ergebnis des vorhergehenden Herantastens begutachten, um den nächsten Manövrierschritt festzulegen. Nach dem Einsteigen kann er im anschließenden Schritt die Zugmaschine entsprechend weiter zurücksetzen. Erschwerend kommt hierbei hinzu, dass die Beendigung des Ernteeinsatzes auf dem Feld häufig in die Abend- oder Nachtstunden fällt, was die Übersicht und Orientierung zusätzlich erschwert.

Mit der gattungsbildenden DE 44 13 694 A1 ist eine Vorrichtung zur Lösung dieses Problems bekannt geworden, bei der zwischen dem Zugmaul der Erntemaschine und der Deichsel des Transportwagens eine Peilschnur gespannt wird, die mit einer Winkelmesseinrichtung am Zugmaul gekoppelt ist. Durch die ermittelten Lagesignale der Winkelmesseinrichtung kann die Winkelposition des Transportwagens relativ zur Erntemaschine ermittelt werden. Gleichzeitig kann der Winkel des Radeinschlags bestimmt und mit dem ermittelten Winkel der Winkelmesseinrichtung verglichen werden. Daraus wird ein Stellsignal für den Radeinschlag abgeleitet. In einem weiteren Ausführungsbeispiel gemäß der DE 44 13 694 A1 werden zwei Ultraschall-Sender-Empfänger eingesetzt, die Ultraschallwellen aussenden und die die von dem Anhänger reflektierten Signale erfassen, um den Peilwinkel zu ermitteln. Nachteilig an diesen bekannten Lösungen ist der komplexe Aufbau und die Empfindlichkeit der Komponenten.

Aufgabe der vorliegenden Erfindung ist es, die beschriebenen Nachteile des Standes der Technik zu vermeiden und insbesondere eine Vorrichtung und ein Verfahren anzugeben, mit der bzw. mit dem bei einem einfachen Aufbau eine zuverlässige Ankuppelung eines Anhängers an eine landwirtschaftliche Arbeitsmaschine möglich ist.

Diese Aufgabe wird gelöst durch eine landwirtschaftliche Arbeitsmaschine und insbesondere durch eine Erntemaschine mit den Merkmalen des Anspruchs 1. Das erfindungsgemäße Verfahren ist Gegenstand des Anspruchs 14. Bevorzugte Weiterbildungen und Ausgestaltungen der Erfindung sind in den Unteransprüchen definiert.

Weitere Vorteile und Merkmale bevorzugter Ausgestaltungen der Erfindung werden im Ausführungsbeispiel angegeben.

Die erfindungsgemäße landwirtschaftliche Arbeitsmaschine ist insbesondere als Erntemaschine ausgeführt und umfasst wenigstens ein Detektionssystem mit wenigstens einem Sensor, um ein sensorgestütztes Ankuppeln eines Anhängers an eine landwirtschaftliche Arbeitsmaschine zu ermöglichen. Erfindungsgemäß arbeitet das Detektionssystem berührungslos und winkelabhängig, wobei der Arbeitswinkel des Detektionssystems einstellbar und mit einer Lenkposition einer Lenkeinrichtung der landwirtschaftlichen Arbeitsmaschine koppelbar ist. Das bedeutet, dass die Ankuppelhilfsvorrichtung und das Detektionssystem geeignet sind, an eine Lenkeinrichtung der landwirtschaftlichen Arbeitsmaschine angekoppelt zu werden, sodass eine Lenkposition und insbesondere ein Lenkeinschlag der Lenkeinrichtung auf das Detektionssystem übertragen wird.

Die erfindungsgemäße landwirtschaftliche Arbeitsmaschine bzw. die erfindungsgemäße Ankuppelhilfsvorrichtung der landwirtschaftlichen Arbeitsmaschine hat viele Vorteile. Durch das berührungslose Detektionssystem wird ein erheblicher Nachteil von mechanischen Detektionssystemen vermieden, bei welchen das Sensorsystem den Anhänger mechanisch mit der z.B. als Zugmaschine ausgeführten Arbeitsmaschine verbindet, da solche System robust ausgelegt werden müssen, um eine zu hohe Fehlerrate zu vermeiden.

Ein weiterer bedeutender Vorteil der erfindungsgemäßen landwirtschaftlichen Arbeitsmaschine ist das winkelsensitiv arbeitende Detektionssystem, sodass das Detektionssystem einen Arbeitswinkel aufweist, unter dem es sensitiv ist und einen eventuell dort vorhandenen Anhänger detektiert. Durch die Einstellbarkeit des Arbeitswinkels des Detektionssystems und durch dessen Koppelung mit der Lenkeinrichtung und insbesondere dem Lenkeinschlag der Lenkeinrichtung wird eine Ankuppelhilfsvorrichtung zur Verfügung gestellt, die einen Anhänger unter einem entsprechenden Lenkeinschlag erfasst und detektiert. Dadurch wird der ganz erhebliche Vorteil erzielt, dass bei Erfassung des Anhängers die Richtung des Lenkeinschlags stimmt, sodass der Fahrer des Fahrzeugs in der Gewissheit zurücksetzen kann, dass er die richtige Richtung eingeschlagen hat.

Das war im Stand der Technik so einfach nicht der Fall, da dort zunächst ein Peilwinkel zum Anhänger ermittelt wurde, der anschließend mit einem separat gemessenen Winkel der Lenkeinrichtung verglichen werden musste, um daraus einen Verstellwinkel für die Lenkeinrichtung zu ermitteln. Mit der erfindungsgemäßen Ankuppelhilfseinrichtung für eine landwirtschaftliche Arbeitsmaschine kann der Fahrer der Erntemaschine hingegen das Lenkrad drehen, bis er ein Signal von dem Detektionssystem erhält und kann anschließend die Erntemaschine zurücksetzen.

An dieser Stelle sei darauf hingewiesen, dass unter dem Begriff "winkelabhängig" im Sinne dieser Anmeldung zu verstehen ist, dass ein Arbeitswinkel existiert, unter dem ein erfassbares Objekt detektiert werden kann. Unter dem Begriff "Arbeitswinkel" wird hier nicht nur ein mathematisch exakter Winkel verstanden, sondern ein Winkelbereich um den Arbeitswinkel herum, der zum Beispiel +/- 1 oder +/- 5 oder +/- 10 Grad beträgt. Insbesondere sei an dieser Stelle darauf hingewiesen, dass der Erfassungswinkel vom Abstand des Anhängers abhängt, da sich die Breite und Länge des zu erfassenden Objekts nicht ändert, sodass mit kleiner werdendem Abstand zum Anhänger die Winkelsensibilität prinzipbedingt abnimmt und das Objekt in einem größeren Winkelbereich geortet wird. Das ist für die Erfindung nicht schädlich, da sich gleichzeitig der Abstand zwischen Zugmaschine und Anhänger entsprechend verringert und so der Anhänger zuverlässig angekoppelt werden kann.

Erfindungsgemäß detektiert das Detektionssystem den Anhänger nur dann, wenn sich der Anhänger im Arbeitsbereich des Arbeitswinkels befindet.

Vorzugsweise wird wenigstens ein Sender eingesetzt, der ein Signal ausstrahlt, welches direkt oder indirekt von dem Sensor erfasst wird.

In einer besonders bevorzugten \Weiterbildung ist der Arbeitswinkel des Detektionssystems einstellbar, in dem das Detektionssystem verschwenkbar vorgesehen ist. An der verschwenkbaren Einheit kann der Sensor und/oder der Sender oder es können Sensor und Sender angeordnet sein, sodass mit einer Schwenkbewegung nur ein Sensor oder nur der Sender oder der Sensor und der Sender gemeinsam verschwenkt werden. Dadurch kann bei einer hohen Winkelsensivität und Winkelauflösung des Detektionssystems der Anhänger zuverlässig und schnell erfasst werden, da bei der Detektion eines Signals der Sensor oder der Sender in die Richtung Anhängers ausgerichtet sind.

Insbesondere ist das Detektionssystem in der horizontalen Ebene verschwenkbar vorgesehen, wobei die Schwenkachse etwa vertikal ausgerichtet ist.

In anderen Ausgestaltungen ist es möglich, dass in Abhängigkeit von der Lenkposition oder dem Lenkeinschlag der Lenkeinrichtung ein bestimmter Sensorbereich zur Detektion freigegeben wird, wobei der entsprechende Sensorbereich einem entsprechenden Arbeitswinkel oder Arbeitswinkelbereich zugeordnet ist. Das ist beispielsweise bei Kamerasystemen möglich, bei denen bestimmte Pixel einem bestimmten Winkelbereich zugeordnet werden.

Besonders bevorzugt ist wenigstens ein Sender vorgesehen, der verschwenkbar angeordnet ist. Der Sender strahlt gerichtete Signale in die Richtung des Arbeitswinkels aus, der mit der Stellung der Lenkeinrichtung koppelbar ist, sodass auch bei Einsatz eines richtungsunempfindlichen Sensors ein Ortungssignal nur dann erfasst wird, wenn der anzukoppelnde Anhänger sich relativ zu der landwirtschaftlichen Arbeitsmaschine bzw. zu dem Zugfahrzeug in dem Arbeitswinkel befindet.

Wenigstens ein Sender kann dabei optische Signale oder akustische Signale oder Funksignale aussenden. Besonders bevorzugt sind Lichtsignale, die beispielsweise durch LEDs oder die durch einen Laser ausgestrahlt werden. Möglich ist aber auch der Einsatz von Ultraschallwellen. Bevorzugt ist auch die gleichzeitige Verwendung mehrerer Sender.

Ebenfalls bevorzugt ist der Sensor richtungsempfindlich ausgeführt und umfasst insbesondere im Wesentlichen nur Signale aus der Richtung des eingestellten Arbeitswinkels. Die aufgenommenen Signale können beispielsweise von dem Anhänger reflektierte Signale sein.

An dem Anhänger kann auch ein Sender vorgesehen sein, dessen Signale von dem richtungsempfindlichen Sensor erfasst werden, wenn der Sensor in die Richtung des Anhängers ausgerichtet ist. In diesem Fall kann der Sender diffuse Signale, d.h. in alle Richtungen Signale aussenden, da der Empfänger winkelsensitiv arbeitet.

In bevorzugten Weiterbildungen der Erfindung ist ein Entfernungssensor vorgesehen, der als zusätzlicher Entfernungssensor vorgesehen sein kann oder der in das Detektionssystem integriert ist. Eine einfache Möglichkeit ist dabei der Einsatz von standardisierten Komponenten in Form eines separaten Entfernungssensors.

In besonders bevorzugten Weiterbildungen der Erfindung werden zwei parallel ausgerichtete oder seitlich versetzt angeordnete Detektionssysteme eingesetzt, deren Signale jeweils separat ausgewertet werden. Damit wird ein System möglich, dass auf eine einfache Art und Weise ein automatisches Ankoppeln ermöglicht. Zur Durchführung des Ankoppelvorgangs wird zunächst die Lenkeinrichtung bewegt, um ein erstes Signal des Anhängers zu erfassen. Wenn die Lenkräder in der passenden Stellung angeordnet sind, erfasst eine oder es erfassen beide Detektionsvorrichtungen den Anhänger. Daraufhin kann die landwirtschaftliche Arbeitsmaschine bzw. das landwirtschaftliche Zugfahrzeug zurückgesetzt werden und bewegt sich während des Zurücksetzens auf den Anhänger zu. Dabei kann es passieren, dass ein Detektionssystem den Kontakt zu dem Anhänger verliert. Je nachdem welches Detektionssystem den Kontakt verliert, wird als Reaktion darauf mit der Lenkeinrichtung entsprechend gegengesteuert. Wenn z.B. das weiter links angeordnete Detektionssystem den Kontakt verliert, muss nach rechts gegengesteuert werden und wenn das weiter rechts angeordnete Detektionssystem den Kontakt verliert, muss nach linkes gegengesteuert werden. Auf diese Art und Weise ist also ein automatisches Ankoppeln möglich.

Alternativ kann über einen Radstellungssensor auch auf die Stellung der Räder zurückgegriffen werden. Dann reicht auch der Einsatz nur eines Detektionssystems, um ohne Neuortung den Ankoppelvorgang durchzuführen. Je nachdem in welche Richtung (rechts, links) die Räder ausgeschlagen sind, wird eine Gegenlenkbewegung durchgeführt. Eine genaue Kenntnis des Lenkeinschlagwinkels ist dafür nicht nötig.

Unter dem Begriff "parallel" wird im Sinne dieser Anmeldung eine im Wesentlichen gleichgerichtete Ausrichtung verstanden, wobei aber kleine Winkelabweichungen möglich sind. Wesentlich ist allerdings, dass sich die beiden Raumerfassungsbereiche der beiden Detektionssysteme unterscheiden.

Die erfindungsgemäße landwirtschaftliche Arbeitsmaschine ist vorzugsweise als landwirtschaftliches Zugfahrzeug ausgeführt und dient zur Ernte. Das landwirtschaftliche Zugfahrzeug ist vorzugsweise mit einer Karosserie oder einem Gestell, einem Antrieb, insbesondere mehreren Rädern, einer Lenkeinrichtung, einer Kuppelvorrichtung und mit einer Ankuppelhilfsvorrichtung ausgerüstet. Die Ankuppelhilfsvorrichtung zum Ankoppeln eines separaten Anhängers bzw. Transportwagens umfasst ein Detektionssystem mit wenigstens einem Sensor, um ein sensorgestütztes Ankoppeln eines Anhängers an die Kuppelvorrichtung des landwirtschaftlichen Zugfahrzeuges bzw. der landwirtschaftlichen Arbeitsmaschine zu ermöglichen. Erfindungsgemäß ist das Detektionssystem berührungslos ausgeführt und arbeitet winkelabhängig. Weiterhin ist der Arbeitswinkel des Detektionssystems erfindungsgemäß einstellbar und mit einer Lenkposition der Lenkeinrichtung der landwirtschaftlichen Arbeitsmaschine gekoppelt.

Eine solche Weiterbildung der landwirtschaftlichen Arbeitsmaschine weist erhebliche Vorteile gegenüber dem Stand der Technik auf. Durch das berührungslose und winkelabhängig arbeitende Detektionssystem, dessen Arbeitswinkel mit der Lenkeinrichtung der landwirtschaftlichen Arbeitsmaschine bzw. der Erntemaschine gekoppelt ist, wird eine winkelsensitive Detektion eines anzukoppelnden Anhängers gewährleistet. Wenn das Detektionssystem ein Signal ausgibt, dass der Anhänger erfasst wurde, kann der Fahrer der landwirtschaftlichen Arbeitsmaschine oder die Person die Erntemaschine rückwärts fahren, wobei gewährleistet ist, dass sich die landwirtschaftliche Arbeitsmaschine Zugmaschine in Richtung auf den Transportwagen oder den Anhänger bewegt.

Sobald das Detektionssystem den Sensorkontakt zum Anhänger verliert, kann der Fahrer die Erntemaschine stoppen und durch Betätigen der Lenkeinrichtung wieder Sensorkontakt zum Anhänger herstellen. Daraufhin bewegt der Fahrer das landwirtschaftliche Zugfahrzeug iterativ solange in Richtung auf den Anhänger bis die Erntemaschine den Anhänger erreicht und der Ankuppelvorgang stattfinden kann.

Insbesondere bei einem zusätzlich mit einem Abstandssensor ausgerüsteten Detektionssystem ist auch ein vollautomatisches Ankoppeln des Anhängers möglich.

Ein erheblicher Vorteil dabei ist das einfache aufgebaute Detektionssystem, welches insgesamt nur wenig Komponenten aufweist und dadurch eine hohe Zuverlässigkeit erreicht.

Insbesondere ist der Sensor richtungssensitiv ausgeführt und der Arbeitswinkel des Sensors ist mit der Lenkposition und insbesondere dem Lenkeinschlag der Lenkeinrichtung derart gekoppelt, dass ein lenkbares Rad der landwirtschaftlichen Arbeitsmaschine im Wesentlichen parallel zu dem Arbeitswinkel des Detektionssystems ausgerichtet ist.

In besonders bevorzugten Ausgestaltungen weist die Erntemaschine vier Räder auf, nämlich zwei Vorderräder und zwei Hinterräder auf. Die Hinterräder sind lenkbar vorgesehen, wie das typischerweise bei einem Mähdrescher oder einem Feldhäcksler der Fall ist. Möglich ist die Verwirklichung der Erfindung auch an einem Traktor.

In einer weiteren bevorzugten Weiterbildung der Erfindung ist das Detektionssystem benachbart zu der Kuppelvorrichtung angeordnet. Insbesondere ist das Detektionssystem unterhalb der Kuppelvorrichtung angeordnet, wobei diese insbesondere am hinteren Ende der Karosserie vorgesehen ist, um eine optimales Ziehen des Anhängers zu ermöglichen. Dadurch wird eine zuverlässige Ausgestaltung erreicht, bei der das mittig angeordnete Detektionssystem die insbesondere als Deichsel ausgeführte Ankuppeleinrichtung des Anhängers zuverlässig und schnell detektiert.

In bevorzugten Ausgestaltungen der landwirtschaftlichen Arbeitsmaschine wird das Detektionssystem in Abhängigkeit von dem Lenkeinschlag verschwenkt, derart, dass eine Winkelstellung des Detektionssystems mit einer Winkelstellung der lenkbaren Räder korrespondiert, sodass das Detektionssystem in die gleiche Richtung "sieht", in der die lenkbaren Räder ausgerichtet sind.

Erfindungsgemäß ist das Detektionssystem mit der Lenkeinrichtung gekoppelt, wobei die Koppelung beispielsweise an den Lenkzylinder oder an die Spurstange oder an die Lenkstange erfolgen kann. Bevorzugt ist insbesondere eine mechanische Koppelung über eine Koppelmechanik vorgesehen, welche die Stellung der gelenkten Räder direkt auf eine Winkelstellung des Detektionssystems überträgt.

Bevorzugt ist auch der Einsatz eines Linearmotors, der in Abhängigkeit von dem erfassten Lenkwinkel angesteuert wird. Über ein solches System ist ebenfalls eine eindeutige Zuordnung bzw. Kopplung der Winkelstellung des Detektionssystems mit der Winkelstellung der lenkbaren Räder möglich.

In bevorzugten Weiterbildungen wird für die landwirtschaftliche Arbeitsmaschine bzw. für das erfindungsgemäße Zugfahrzeug eine Ankuppelhilfsvorrichtung eingesetzt, wie sie zuvor beschrieben wurde.

Das erfindungsgemäße landwirtschaftliche Gespann weist eine landwirtschaftliche Arbeitsmaschine und insbesondere eine Erntemaschine und einen Anhänger auf, wobei die landwirtschaftliche Arbeitsmaschine vorzugsweise als Erntemaschine und der Anhänger vorzugsweise als Transportwagen ausgeführt ist. Bei dem erfindungsgemäßen landwirtschaftlichen Gespann weist die landwirtschaftliche Arbeitsmaschine einen Antrieb, mehrere Räder, eine Lenkeinrichtung und eine Kuppelvorrichtung auf und ist mit einer Ankuppelhilfsvorrichtung mit einem Detektionssystem mit wenigstens einem Sensor ausgerüstet, um ein sensorunterstütztes Ankoppeln des Anhängers an die Kuppelvorrichtung zu ermöglichen. Erfindungsgemäß arbeitet das Detektionssystem berührungslos und winkelabhängig. Dabei ist der Arbeitswinkel des Detektionssystems einstellbar und mit der Lenkeinrichtung und insbesondere dem Lenkeinschlag der landwirtschaftlichen Arbeitsmaschine gekoppelt.

Erfindungsgemäß ist es möglich, dass ein Teil oder mehrere Teile des Detektionssystems an der als Zugfahrzeug ausgebildeten landwirtschaftlichen Arbeitsmaschine und/oder an dem Anhänger vorgesehen sind. Beispielsweise ist es möglich, dass an dem Zugfahrzeug der Sensor vorgesehen ist, der bei Auftreffen eines Signals des an dem Zugfahrzeug vorgesehenen Senders z.B. drahtlos ein Signal an das Zugfahrzeug bzw. an die Steuerungseinrichtung des Detektionssystems überträgt. Möglich ist es auch, dass ein in z. B. im Wesentlichen alle Richtungen ausstrahlender Sender - z. B. eine geeignete Lichtquelle - an dem Anhänger vorgesehen ist, wobei an dem Zugfahrzeug ein winkelsensitiver Sensor angeordnet ist, der das von dem Sender ausgestrahlte Signal nur dann erfasst, wenn der Sensor auf den Anhänger ausgerichtet ist.

In anderen Ausgestaltungen ist es möglich, dass ein Reflektor an dem Anhänger vorgesehen ist, der die von einem am Zugfahrzeug vorgesehenen Sender ausgestrahlten Signale reflektiert, wobei der Sensor das reflektierte Signal detektiert, wenn der Lenkeinschlag derart ist, dass die lenkbaren Räder des Zugfahrzeugs auf den Anhänger ausgerichtet sind. Auch das erfindungsgemäße Gespann und dessen Weiterbildungen bieten gegenüber dem Stand der Technik erhebliche Vorteile, da der Aufbau einfach und unkompliziert ist.

In bevorzugten Weiterbildungen des erfindungsgemäßen Gespanns wird ein Zugfahrzeug und/oder eine Ankuppelhilfsvorrichtung eingesetzt, wie sie zuvor beschrieben wurden.

Das erfindungsgemäße Verfahren dient zum Ankoppeln eines Anhängers an eine landwirtschaftliche Arbeitsmaschine und wird insbesondere unter Verwendung der zuvor beschriebenen Vorrichtungen durchgeführt. Bei dem Ankoppeln wird ein Detektionssystem verwendet, das berührungslos und winkelabhängig arbeitet, wobei der Arbeitswinkel des Detektionssystems einstellbar ist und mit einer Lenkposition der Lenkeinrichtung der landwirtschaftlichen Arbeitsmaschine und insbesondere der Erntemaschine gekoppelt ist. Zum sensorgestützten Ankuppeln des Anhängers an die Kuppelvorrichtung wird die Lenkposition der Lenkeinrichtung solange verändert, bis der Sensor des Detektionssystems den Anhänger detektiert. Anschließend wird die landwirtschaftliche Arbeitsmaschine in die Richtung des Anhängers bewegt.

Das erfindungsgemäße Verfahren bietet ebenfalls eine Reihe von Vorteilen gegenüber gegen über den bekannten herkömmlichen Verfahren, da der Fahrer das Lenkrad nur solange drehen muss, bis das Detektionssystem den Anhänger bzw. dessen Deichsel detektiert. Anschließend bewegt der Fahrer die landwirtschaftliche Arbeitsmaschine bzw. das Zugfahrzeug bei unveränderter Lenkposition - d.h. bei unverändertem Lenkeinschlag - der Lenkeinrichtung rückwärts und damit in die Richtung des Anhängers.

In einer Weiterbildung wird ein halbautomatisches oder ein automatisches Ankoppeln durchgeführt, in dem die Lenkposition und damit der Lenkeinschlag der Lenkeinrichtung erneut verändert wird, sobald der Sensor den Anhänger nicht mehr detektiert. Auf diese Weise wird sichergestellt, dass das Fahrzeug nur dann bewegt wird, wenn das Detektionssystem den Anhänger detektiert.

In einer bevorzugten Weiterbildung des Verfahrens wird zusätzlich ein Abstandssensor eingesetzt, mit dem dann ein automatisches Ankoppeln möglich ist.

In bevorzugten Weiterbildungen wird während der Korrektur eine Korrekturzeit und/oder ein Korrekturwinkel integriert. Es wird ein erneuter Suchvorgang gestartet, falls ein vorbestimmter Korrekturgrenzwert überschritten wird. Der zeitliche Korrekturgrenzwert wird z.B. nach 1 Sekunde oder nach 0,5 Sekunden überschritten. Je nach Anwendung und Ausgestaltung sind auch andere Werte möglich.

Weitere Vorteile und Merkmale der vorliegenden Erfindung ergeben sich aus der folgenden Beschreibung eines Ausführungsbeispiels, dass mit Bezug auf die beiliegenden Figuren nachfolgend beschrieben wird.

### In den Figuren zeigen:

- Figur 1: eine Seitenansicht eines erfindungsgemäßen Mähdreschers;
- Figur 2: eine perspektivische Ansicht eines Schneidwerkwagens;
- Figur 3: eine perspektivische Unteransicht der Ankuppelhilfsvorrichtung des Mähdreschers nach Fig. 1;
- Figur 4: eine stark schematische Aufsicht auf die Hinterradachse des Mähdreschers nach Fig. 1 mit den lenkbaren Rädern in einer ersten Lenkposition;
- Figur 5: eine stark schematische Aufsicht auf die Hinterradachse des Mähdreschers nach Fig. 1 mit den lenkbaren Rädern in einer zweiten Lenkposition;
- Figur 6: eine stark schematische Aufsicht auf die Hinterradachse des Mähdreschers nach Fig. 1 mit den lenkbaren Rädern in einer dritten Lenkposition; und
- Figur 7: eine stark schematische Aufsicht auf den Mähdrescher nach Fig. 1 und den Ankuppelvorgang.

Mit Bezug auf die Figuren wird nun ein Ausführungsbeispiel der Erfindung erläutert.

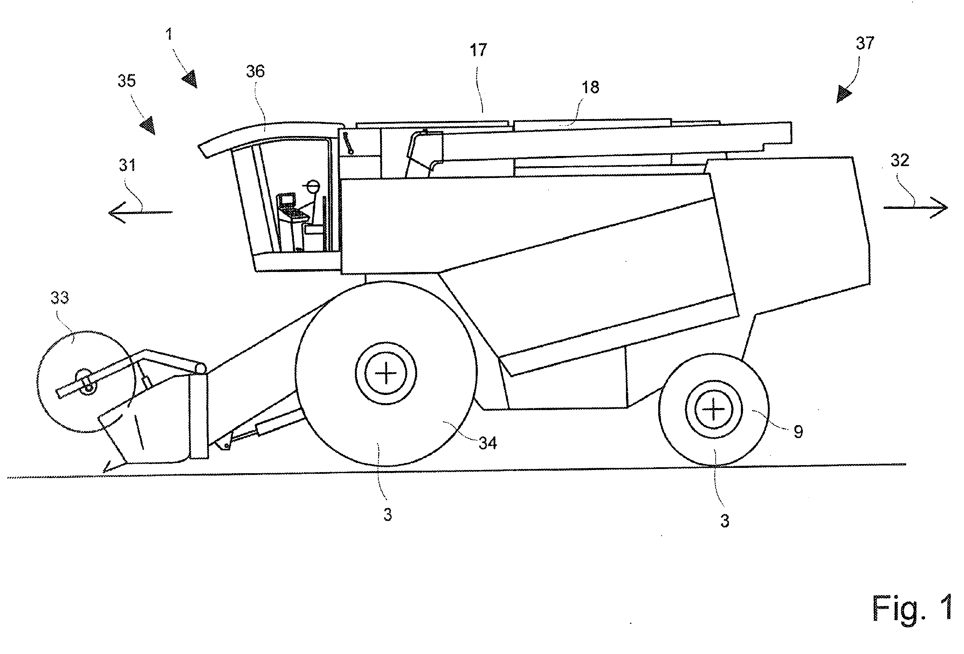

In Figur 1 ist eine schematische Seitenansicht eines als Mähdrescher ausgeführten landwirtschaftlichen Zugfahrzeugs 1 dargestellt, welcher eine Karosserie 17 und Räder 3 umfasst, von denen die Hinterradräder 9 lenkbar sind. Der Antrieb 18 ist im Inneren der Karosserie angeordnet.

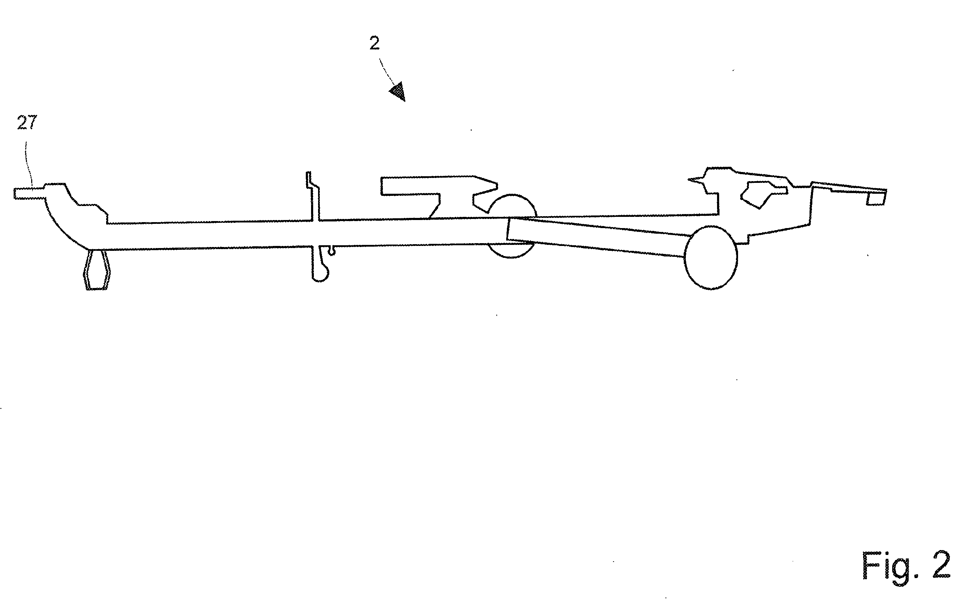

Am vorderen Ende 35 des Mähdreschers 1 ist die Fahrerkabine 36 vorgesehen, von der der Fahrer in die Vorwärtsrichtung 31 eine gute Sicht hat, während er das hintere Ende 37 nur schlecht überblicken kann. Direkt hinter den Mähdrescher 1 kann der Fahrer aus der Fahrerkabine auch über eventuell montierte Außenspiegel nicht sehen, sodass bei Fahrt in Rückwärtsrichtung 32 ein Ankuppelvorgang mit den im Figur 2 dargestellten Transportwagen 2 nur mit Hilfe einer Hilfsperson oder über ein langwieriges iteratives Verfahren möglich ist.

Der Transportwagen 2 ist in Figur 2 in einer perspektivischen Ansicht schematisch dargestellt und umfasst zwei oder mehr Räder, sowie eine Deichsel 27, mit der der Transportwagen 2 an den Mähdrescher 1 aus Figur 1 angekuppelt wird.

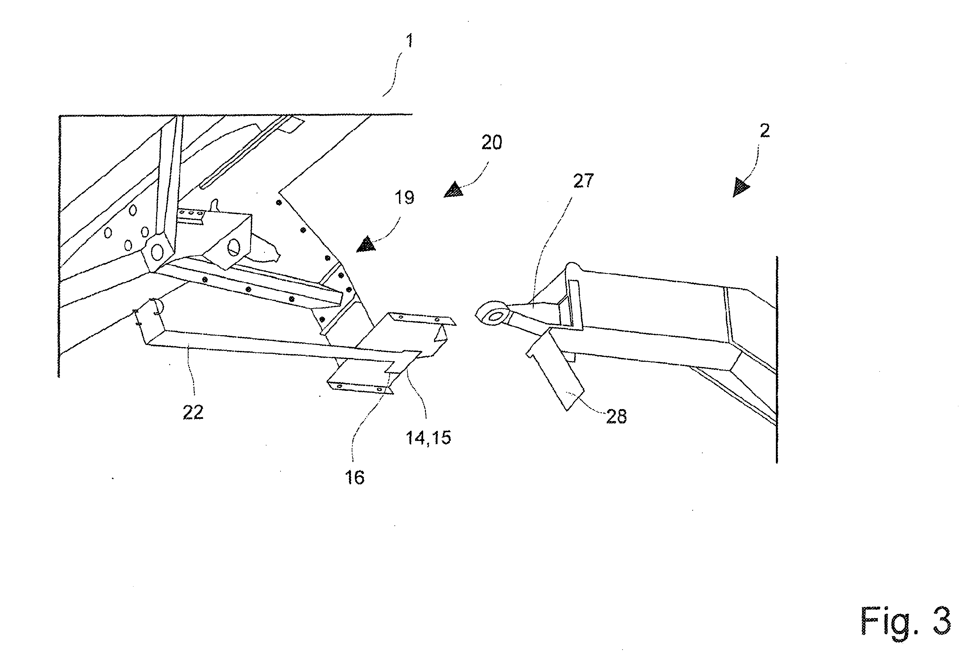

In Figur 3 ist eine perspektivische Unteransicht der Kuppelvorrichtung 19 dargestellt, die an dem Mähdrescher 1 angebracht ist. Die Kuppelvorrichtung 19 wird mit der Deichsel 27 des Transportwagens 2 verbunden, um das auf dem Transportwagen 2 angeordnete Schneidwerkzeug 33 nach dem Ernteeinsatz über die Straße abzutransportieren, da bei einem am Mähdrescher montierten Schneidwerkzeug 33 die gesetzlich zulässige Transportbreite im Regelfall überschritten würde.

Das Detektionssystem 20 weist hier im Ausführungsbeispiel eine gemeinsame Sender-Empfänger-Einheit 16 auf, an der ein Sender 14 und ein Empfänger 15 vorgesehen sind. Hier im Ausführungsbeispiel arbeitet das Detektionssystem 20 als Reflektionslichtschranke, was bedeutet, dass der Sender 14 Licht ausstrahlt, welches im Ortungsfalle von dem Reflektionsspiegel 28, der an der Deichsel 27 des Transportwagens 2 angebracht ist, zurückreflektiert und von dem Empfänger bzw. Sensor 15 aufgenommen wird, sofern sich der Transportwagen 2 in einer detektierbaren Position befindet.

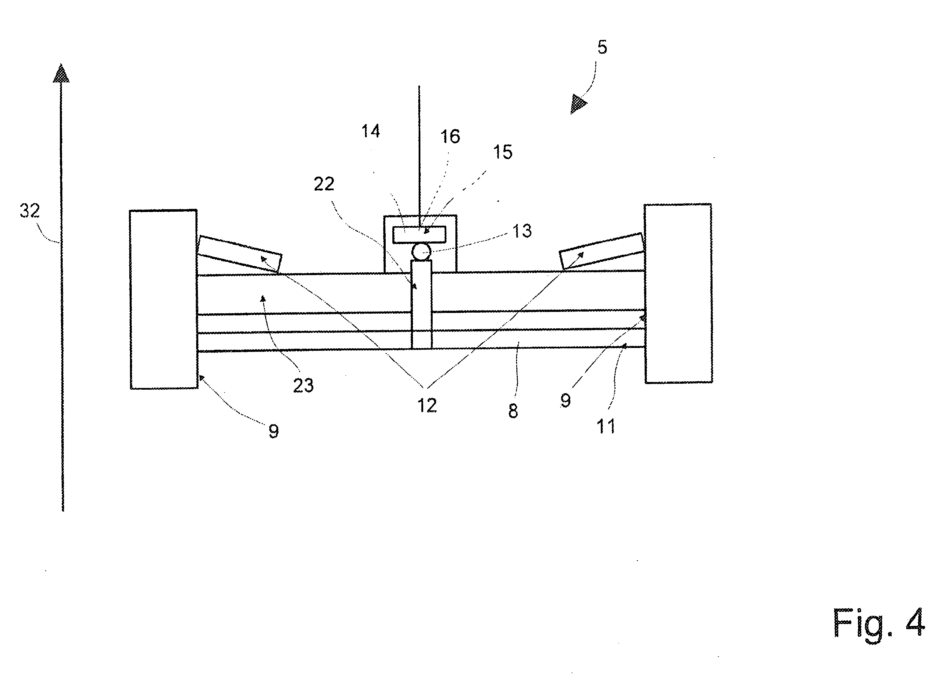

Die Sender-Empfänger-Einheit 16 des Detektionssystems 20 ist über die Koppelmechanik 22 mit der Lenkeinrichtung 8 mechanisch verbunden, die in einer schematischen Aufsicht in drei unterschiedlichen Stellungen in den Figuren 4 bis 6 dargestellt ist. Die mit der Lenkposition der Lenkeinrichtung mechanisch gekoppelte Sender-Empfänger-Einheit 16 bewegt sich je nach Stellung des Lenkrads des Mähdreschers 1 derart, dass die Sender-Empfänger-Einheit 16 immer parallel zu den lenkbaren Rädern 9 ausgerichtet ist. Das bedeutet, dass bei einem Linkseinschlag der Lenkeinrichtung die Sender-Empfänger-Einheit nach links verschwenkt wird, während bei einem Rechtseinschlag der Lenkeinrichtung eine Verschwenkung nach rechts erfolgt. Die Verschwenkung der Sende-Empfänger-Einheit 16 erfolgt hier um eine im Wesentlichen vertikale Achse 13, sodass der Arbeitswinkel des Detektionssystems 20 praktisch immer innerhalb einer horizontalen Ebene bleibt.

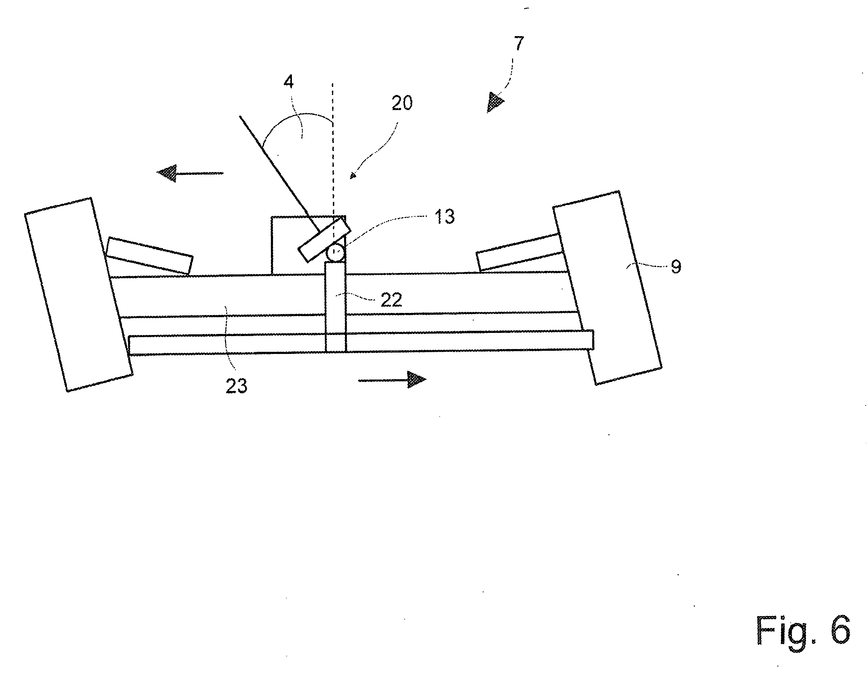

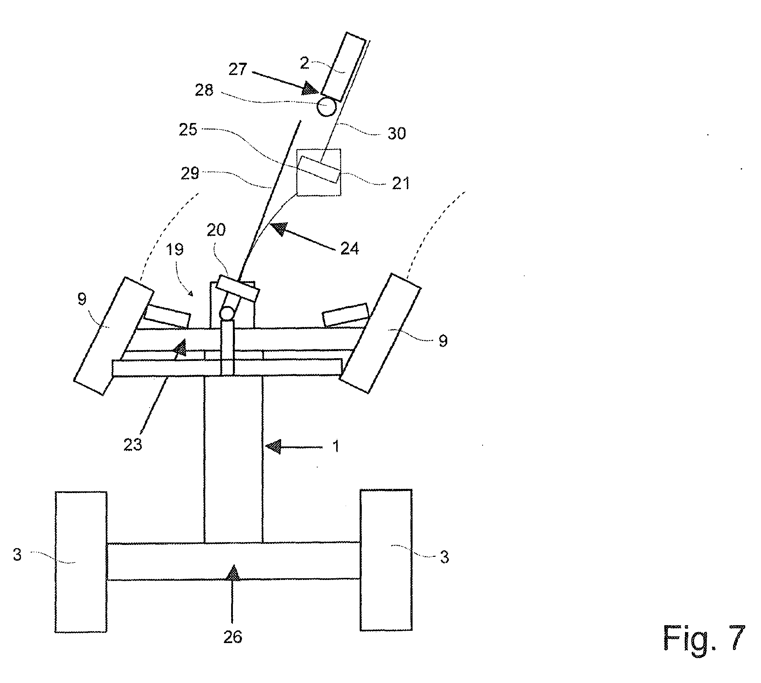

Figur 4 zeigt in einer schematischen Aufsicht auf die Hinterradachse 23 des Mähdreschers 1 den prinzipiellen Aufbau und in Verbindung mit den Figuren 6 und 7 die Funktion.

Bei der in Figur 4 dargestellten ersten Lenkposition 5 der Lenkeinrichtung 8 ist der Arbeitswinkel 4 des Detektionssystems genau nach hinten ausgerichtet. Das Detektionssystem 20 bzw. die Sender-Empfänger-Einheit 16 mit dem Sensor 3 ist über die vertikale Schwenkachse 13 verschwenkbar angeordnet und über die Koppelmechanik 22 mit der Lenkeinrichtung 8 gekoppelt, sodass bei einer Positionsänderung der Lenkeinrichtung die Sender-Empfänger-Einheit 16 um die vertikale Achse 13 geschwenkt wird. Dabei kann die Koppelmechanik mit der Spurstange 11 verbunden sein, wie es in den Figuren 4 bis 6 dargestellt ist oder sie kann mit einem oder mehreren Hydraulikzylindern 12 verbunden sein, um die Winkelposition der Lenkräder 9 abzugreifen.

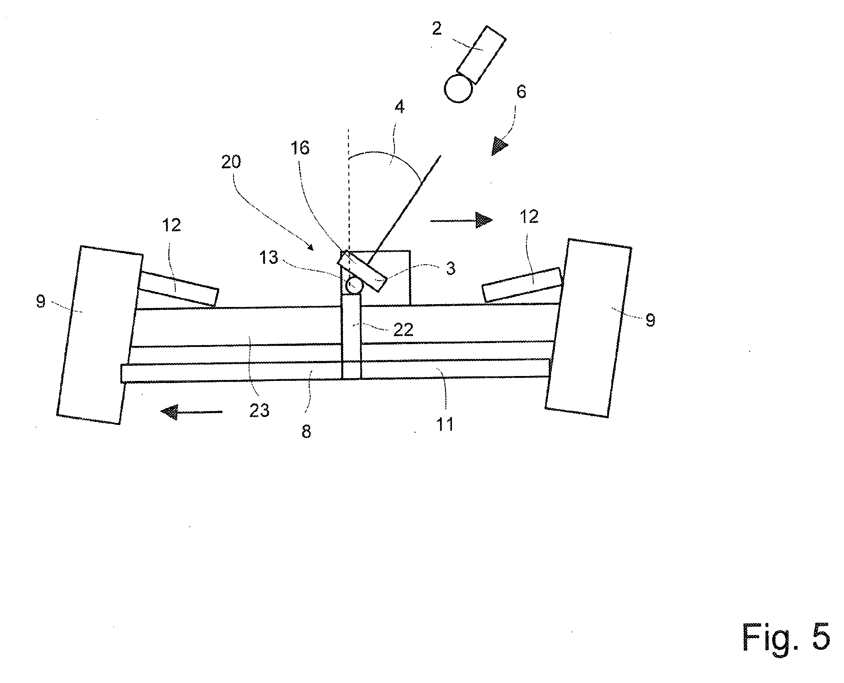

Bei einem Lenkradeinschlag nach rechts, wie es schematisch in Figur 5 dargestellt ist, verschwenkt auch die Sende-Empfangs-Einheit 16, sodass der Arbeitswinkel 4 des Detektionssystems 20 nach rechts verschwenkt wird. Dabei bleibt der Arbeitswinkel 4 im Wesentlichen parallel zu den lenkbaren Rädern 9 ausgerichtet, sodass das Detektionssystem 20 immer in die Richtung "schaut", in der die lenkbaren Räder ausgerichtet sind.

Wenn hingegen nach links gelenkt wird und ein entsprechender Linkslenkeinschlag erfolgt, verschwenkt die Sende-Empfangs-Einheit 16 des Detektionssystems 20 nach links, wie in Figur 6 dargestellt.

Durch eine nacheinander erfolgende Drehung des Lenkrads nach links und nach rechts kann folglich ein sich in der Nähe befindlicher Transportwagen bzw. dessen Deichsel detektiert werden. Bei der Erfassung des Transportwagens wird der Lenkvorgang gestoppt und der Mähdrescher 1 rückwärts in Richtung auf den Transportwagen 2 zu bewegt, solange, bis der Transportwagen 2 entweder erreicht wird oder aber das Signal des Detektionssystems 20 wieder verloren geht. Dann kann über einen erneuten Lenkvorgang der Transportwagen 2 wieder geortet werden, um den Ankuppelvorgang fortzusetzen.

In einer anderen Ausgestaltung wird auf die Lenkeinstellung der Lenkeinrichtung zurückgegriffen, um z. B. einen automatischen Ankoppelvorgang fortzusetzen.

In Figur 7 ist eine schematische Aufsicht auf einen Mähdrescher 1 dargestellt, der eine Vorderachse 26 mit Rädern 3 und eine Hinterradachse 23 mit lenkbaren Hinterradrädern 9 aufweist. Die Deichsel 27 des Transportwagens 2 ist ebenfalls schematisch in geringem Abstand dargestellt. In der ersten Position wird ein erster Ortungsstrahl 29 in Richtung auf die Deichsel 27 ausgestrahlt und trifft die Deichsel 27, wodurch das Detektionssignal in dem Detektionssystem ausgelöst wird, sodass der Fahrer des Mähdreschers 1 den Mähdrescher rückwärts auf den Transportwagen 2 zu bewegt. Dabei folgt der Mähdrescher dem in Figur 7 eingezeichneten Spurverlauf 24 der Anhängerkuppelung.

Aufgrund der seitlichen Verschiebung des Ortungsstrahls verliert das Detektionssystem 20 das Ortungssignal, wenn sich der Mähdrescher beziehungsweise das Detektionssystem 20 in der zweiten Detektionsposition 25 befindet, da der zweite Ortungsstrahl 30 dann an der Deichsel 27 des Transportwagens 2 vorbeiführt. In dieser Position kann ein erneuter Suchvorgang gestartet werden, in dem das Lenkrad des Mähdreschers entsprechend gedreht wird, bis der Transportwagen 2 wieder gefunden wird.

Alternativ dazu wird zunächst auf die aktuelle Stellung und gegebenenfalls die bisherigen Lenkvorgänge zurückgegriffen. Da sich die lenkbaren Hinterradräder 9 des Mähdreschers in eine Richtung verschwenkt befinden, wenn der Kontakt bei der Rückwärtsbewegung verloren geht, muss entsprechend gegengelenkt werden, um den Transportwagen 2 wiederzufinden, da der Spurverlauf 24 bei der Rückwärtsfahrt zu einer Übersteuerung führt. Folglich kann in Kenntnis der aktuellen Winkelposition der lenkbaren Räder ein verlorenes Signal des Detektionssystems wiederhergestellt werden, in dem gegengelenkt wird. Auf diese Weise ist ein automatischer Ankoppelvorgang auch mit nur einem Detektionssystem 20 möglich.

Alternativ dazu kann ein zweites Detektionssystem 21 eingesetzt werden, das prinzipiell, wie in Figur 7 gezeigt, parallel zu dem ersten Detektionssystem 20 angeordnet ist. Die beiden Detektionssysteme 20 und 21 werden insbesondere nebeneinander mit einem geringen seitlichen Abstand am hinteren Ende 37 vorzugsweise symmetrisch zur mittig angebrachten Kuppelvorrichtung 19 vorgesehen. Wenn nun eines der Detektionssysteme das Ortungssignal verliert, muss die Lenkradstellung nur entsprechend gegengesteuert werden, sodass wieder beide Detektionssysteme ein Ortungssignal erhalten.

Grundlegend für die Erfindung ist der Spurverlauf 24 der Anhängekupplung 19, der in Fig. 7 bei der Rückwärtsfahrt schematisch dargestellt ist. Bei anhaltender Rückwärtsfahrt verliert die Reflexlichtschranke der Sender-Empfänger-Einheit 16 die Position der Deichsel 27 des als Schneidwerkwagen ausgeführten Transportwagens 2. Der Spurverlauf 24 der Anhängekupplung 19 verläuft links an der Deichsel 27 des Schneidwerkwagens 2 vorbei. Sind die Räder 9 nach rechts eingeschlagen, verläuft der Spurverlauf 24 der Anhängekupplung 19 rechts an der Deichsel 27 des Schneidwerkwagens vorbei. Deswegen wird die Steuerungseinrichtung der Ankuppelhilfsvorrichtung 10 so ausgelegt, dass immer in die entgegengesetzte Richtung der Hinterräder 9 korrigiert wird. Um dies zu ermöglichen wird insbesondere die Radstellung der Hinterradachse 23, die als Lenkachse dient, abgefragt. Die Position der Hinterräder 9 könnte in anderen Ausgestaltungen auch anhand eines Wegsensors, der in dem linken Lenkzylinder 12 integriert ist, ermittelt werden.

In der Darstellung nach Figur 7 muss die Steuerungseinrichtung bzw. der Regler während der Rückwärtsfahrt immer nach rechts korrigieren, sobald die Reflexionslichtschranke das Reflexionssignal des Reflektors verliert.

Die Funktionsweise der Erfindung wird im folgenden beschrieben. Um die Position der Deichsel 27 des Anhängers 2 zu ermitteln, wird in einem einfachen und besonders bevorzugten Ausführungsbeispiel an der Deichsel 27 des Schneidwerkagens 2 ein Reflektor 28 befestigt. Zur Realisierung der erforderlichen Steuerung wird die Steuerungseinrichtung des Detektionssystems 20 verwendet.

Der automatische Ankuppelvorgang ist in eine Suchphase und eine Ankuppelphase aufgeteilt. Die Suchphase wird z.B. durch Betätigung eines Taster "Position finden" in der Fahrerkabine 36 gestartet und die Lenkachse wird angesteuert.

Die Lenkachse 23 des Mähdreschers sucht nun automatisch mit der angekoppelten Sender-Empfänger-Einheit 16 die Position der Deichsel 27 des Schneidwerkwagens 2. Die Räder 9 der Lenkachse 23 und die mit einer Reflexlichtschranke ausgerüstete Sender-Empfänger-Einheit 16 schlagen z.B. zunächst synchron nach rechts ein. Bekommt die Sender-Empfänger-Einheit 16 auf der rechten Seite bei rechtem Lenkeinschlag kein Reflexionssignal vom Reflektor 28, so schlagen die Räder 9 der Lenkachse 23 nach links ein. Bekommt die Refloxlichtsohranke 28 auf der linken Seite auch kein Reflexionssignal vom Reflektor 28, so wird die Suchphase erfolglos abgeschlossen und ein Signal wird ausgegeben. Der Anhänger 2 befindet sich dann z.B. außerhalb der Reichweite.

Die Suchphase kann auch manuell durchgeführt werden, indem man das Lenkrad manuell betätigt (beliebig nach links oder nach rechts einschlagen) und somit die Position der Deichsel 27 sucht, bis der Leuchtmelder aufleuchtet.

Bekommt die Sender-Empfänger-Einheit 16 während der automatischen oder manuellen Ankuppelphase ein Reflexionssignal vom Reflektor 28, so leuchtet in der Fahrerkabine 36 ein Leuchtmelder "Position gefunden" auf und die Suchphase ist erfolgreich beendet. Die Lenkbewegung wird gestoppt.

Die Ankuppelphase wird z.B. durch Betätigen des Schalters "Position halten" eingeleitet, woraufhin der Mähdrescherfahrer mit der langsamen Rückwärtsfahrt in Richtung des Schneidwerkwagens 2 beginnen kann. Er muss lediglich Rückwärtsfahren, die eventuelle Korrektur übernimmt die Steuerungseinrichtung.

Verliert die Reflexlichtschranke während der Ankuppelphase die Position der Deichsel 27, regelt die Steuerungseinrichtung nach, so dass die Position der Deichsel 27 schnell wieder gefunden wird. Während der Nachregelungszeit erlischt der zugehörige Leuchtmelder kurz.

Um die Korrekturrichtung ermitteln zu können, wird von der Regelung die Radstellung der Lenkachse 23 eingelesen. Gegebenenfalls kann eine schon vorhandene Radstellungsanzeige hierfür verwendet werden, wobei allerdings darauf geachtet werden sollte, dass die Radstellung schon bei kleinen Auslenkungen angezeigt wird.

Die entsprechende Radstellung der Lenkachse 23 könnte auch von dem im Lenkzylinder 12 eventuell integrierten Wegsensor ermittelt werden. Für die Regelung muss nur die Radstellung (Räder nach rechts, gerade oder nach links eingeschlagen) ermittelt werden, der Einschlagwinkel ist nicht erforderlich.

Um zu verhindern, dass die Korrektur in die falsche Richtung verläuft, kann eine entsprechende Zeit, bzw. eine entsprechende Winkelangabe integriert werden. Wenn die Dauer der Korrekturzeit bzw. die Größe des Korrekturwinkels einen vorbestimmten Korrekturgrenzwert überschreitet, wird vorzugsweise erneut gegengesteuert oder ein erneuter Suchvorgang gestartet wird. Wenn z.B. die Reflexionslichtschranke während der Korrektur binnen einer Sekunde kein Reflexionssignal bekommt, muss in die andere Richtung korrigiert werden oder es muss mit der Suchphase neu begonnen werden.

Verwendet man zwei benachbart angeordnete Detektionssysteme 20, 21, die z.B. mit Reflexlichtschranken ausgerüstet sind, kann man anhand der beiden Signale die Korrekturrichtung ermitteln. Bekommen beide Reflexlichtschranken ein Reflexionssignal, so ist die Position der Deichsel 27 des Schneidwerkwagens 2 ermittelt. Verliert eine Reflexlichtschranke während der Ankuppelphase ein Reflexionssignal, so muss die Regelung entsprechen korrigieren.

### Bezugszeichenliste:

- 1: Zugfahrzeug
- 2: Anhänger
- 3: Rad
- 4: Arbeitswinkel
- 5: Erste Position
- 6: Zweite Position
- 7: Dritte Position
- 8: Lenkeinrichtung
- 9: Hinterrad
- 10: Ankuppelhilfsvorrichtung
- 11: Spurstange
- 12: Hydraulikzylinder
- 13: Schwenkachse
- 14: Sender
- 15: Sensor
- 16: Sender-Empfänger-Einheit
- 17: Karosserie
- 18: Antrieb
- 19: Kuppelvorrichtung
- 20: Detektionssystem
- 21: Detektionssystem
- 22: Koppelmechanik
- 23: Achse
- 24: Spurverlauf der Anhängekupplung
- 25: Zweite Detektionsposition
- 26: Vorderachse
- 27: Deichsel
- 28: Reflektor
- 29: Erste Ortungsstrahl
- 30: Zweiter Ortungsstrahl
- 31: Vorwärtsrichtung
- 32: Rückwärtsrichtung
- 33: Schneidwerkzeug
- 34: Vorderrad
- 35: Vorderes Ende
- 36: Fahrerkabine
- 37: Hinteres Ende

## Patentansprüche

1. Landwirtschaftliche Arbeitsmaschine (1), insbesondere Erntemaschine, umfassend ein Detektionssystem (20) mit wenigstens einem Sensor (15), um ein sensorgestütztes Ankoppeln eines Anhängers (2) zu ermöglichen,
**dadurch gekennzeichnet,**
**dass** das Detektionssystem (20) berührungslos und winkelabhängig arbeitet, wobei der Arbeitswinkel (4) des Detektionssystems (20) einstellbar und mit einer Lenkposition (5-7) einer Lenkeinrichtung (8) der Arbeitsmaschine (1) koppelbar ist.

2. Landwirtschaftliche Arbeitsmaschine (1), insbesondere Erntemaschine, nach Anspruch 1, **dadurch gekennzeichnet, dass** das Detektionssystem (20) verschwenkbar vorgesehen ist.

3. Landwirtschaftliche Arbeitsmaschine (1), insbesondere Erntemaschine, nach Anspruch 1 oder 2, **dadurch gekennzeichnet, dass** ein Sender (14) vorgesehen ist, der in den Arbeitswinkel (4) gerichtete Signale ausstrahlt.

4. Landwirtschaftliche Arbeitsmaschine (1), insbesondere Erntemaschine, nach einem der vorhergehenden Ansprüche, **dadurch gekennzeichnet, dass** der Sensor (15) richtungsempfindlich ist und Signale aus der Richtung des eingestellten Arbeitswinkels (4) erfasst.

5. Landwirtschaftliche Arbeitsmaschine (1), insbesondere Erntemaschine, nach einem der vorhergehenden Ansprüche, **dadurch gekennzeichnet, dass** ein Entfernungssensor integriert ist.

6. Landwirtschaftliche Arbeitsmaschine (1), insbesondere Erntemaschine, nach einem der vorhergehenden Ansprüche, **dadurch gekennzeichnet, dass** zwei parallel ausgerichtete und seitlich versetzt angeordnete Detektionssysteme (20, 21) vorgesehen sind.

7. Landwirtschaftliche Arbeitsmaschine (1), insbesondere Erntemaschine, nach einem der vorhergehenden Ansprüche, **dadurch gekennzeichnet, dass** sie eine Karosserie (17), einen Antrieb (18), mehrere Räder (9) und eine Kuppelvorrichtung (19) umfasst, um ein sensorgestütztes Ankoppeln eines Anhängers (2) an die Kuppelvorrichtung (19) zu ermöglichen.

8. Landwirtschaftliche Arbeitsmaschine (1), insbesondere Erntemaschine, nach Anspruch 7, **dadurch gekennzeichnet, dass** die Räder (9) als Vorder- und Hinterräder ausgeführt sind und wobei die Hinterräder lenkbar vorgesehen sind.

9. Landwirtschaftliche Arbeitsmaschine (1), insbesondere Erntemaschine, nach Anspruch 7 oder 8, **dadurch gekennzeichnet, dass** das Detektionssystem (20) unterhalb der Kuppelvorrichtung (19) angeordnet ist, welche insbesondere am hinteren Ende der Karosserie (17) mittig angeordnet ist.

10. Landwirtschaftliche Arbeitsmaschine (1), insbesondere Erntemaschine, nach einem der Ansprüche 7 bis 9, **dadurch gekennzeichnet, dass** das Detektionssystem (20) mit der Veränderung der Lenkposition (5-7) verschwenkt wird, derart, dass eine Winkelstellung des Detektionssystems (20) mit einer Winkelstellung der lenkbaren Räder (9) korrespondiert.

11. Landwirtschaftliche Arbeitsmaschine (1), insbesondere Erntemaschine, nach einem der vorhergehenden Ansprüche, **dadurch gekennzeichnet, dass** sie einen Anhänger (2) umfasst, wobei das Detektionssystem (20) mit wenigstens einem Sensor (15) vorgesehen ist, um ein sensorgestütztes Ankoppeln des Anhängers (2) an die Kuppelvorrichtung (19) zu ermöglichen.

12. Landwirtschaftliche Arbeitsmaschine (1), insbesondere Erntemaschine, nach Anspruch 11, **dadurch gekennzeichnet, dass** ein Sender (14) oder ein Reflektor (28) an dem Anhänger (2) angeordnet ist.

13. Landwirtschaftliche Arbeitsmaschine (1), insbesondere Erntemaschine, nach Anspruch 11 oder 12, **dadurch gekennzeichnet, dass** ein Sensor (15) an dem Anhänger (2) angeordnet ist, der drahtlos mit dem Detektionssystem (20) verbunden ist.

14. Verfahren zum Ankoppeln eines Anhängers (2) an ein Zugfahrzeug (1) gemäß wenigstens einem der vorhergehenden Ansprüche, **dadurch gekennzeichnet, dass** ein Detektionssystem (20) verwendet wird, das berührungslos und winkelabhängig arbeitet und dessen Arbeitswinkel (4) einstellbar und mit einer Lenkposition (5-7) der Lenkeinrichtung (8) des Zugfahrzeugs (1) gekoppelt ist, wobei zum sensorgestützten Ankoppeln des Anhängers (2) an die Kuppelvorrichtung (19) die Lenkposition (5-7) der Lenkeinrichtung (8) verändert wird, bis der Sensor (15) des Detektionssystems (20) den Anhänger (2) detektiert, wobei anschließend das Zugfahrzeug (1) in Richtung des Anhängers (2) bewegt wird.

15. Verfahren zum Ankoppeln eines Anhängers (2) an ein Zugfahrzeug (1) nach Anspruch 14, **dadurch gekennzeichnet, dass** ein halbautomatisches oder automatisches Ankoppeln erfolgt und die Lenkposition (5-7) der Lenkeinrichtung (8) erneut verändert wird, wenn der Sensor (15) den Anhänger (2) nicht mehr detektiert.

16. Verfahren zum Ankoppeln eines Anhängers (2) an ein Zugfahrzeug (1) nach Anspruch 15, **dadurch gekennzeichnet, dass** eine Korrekturzeit bzw. ein Korrekturwinkel integriert wird und ein erneuter Suchvorgang gestartet wird, falls ein vorbestimmter Korrekturgrenzwert überschritten wird.

## Claims

1. An agricultural working machine (1), in particular a harvester, including a detection system (20) having at least one sensor (15) to permit sensor-supported coupling of a trailer (2),
**characterised in that**
the detection system (20) operates in a contact-less manner and in angle-dependent relationship, wherein the working angle (4) of the detection system (20) is adjustable and can be coupled to a steering position (5-7) of a steering arrangement (8) of the working machine (1).

2. An agricultural working machine (1), in particular a harvester, according to claim 1 **characterised in that** the detection system (20) is pivotable.

3. An agricultural working machine (1), in particular a harvester, according to claim 1 or claim 2 **characterised in that** there is provided a transmitter (14) which emits signals directed into the working angle (4).

4. An agricultural working machine (1), in particular a harvester, according to one of the preceding claims **characterised in that** the sensor (15) is direction-sensitive and detects signals from the direction of the set working angle (4).

5. An agricultural working machine (1), in particular a harvester, according to one of the preceding claims **characterised in that** a range sensor is integrated.

6. An agricultural working machine (1), in particular a harvester, according to one of the preceding claims **characterised in that** there are provided two detection systems (20, 21) which are oriented in parallel relationship and arranged in laterally displaced relationship.

7. An agricultural working machine (1), in particular a harvester, according to one of the preceding claims **characterised in that** it includes a body (17), a drive (18), a plurality of wheels (9) and a coupling device (19) to permit sensor-supported coupling of a trailer (2) to the coupling device (19).

8. An agricultural working machine (1), in particular a harvester, according to claim 7 **characterised in that** the wheels (9) are in the form of front and rear wheels and wherein the rear wheels are steerable.

9. An agricultural working machine (1), in particular a harvester, according to claim 7 or claim 8 **characterised in that** the detection system (20) is arranged beneath the coupling device (19) which is arranged centrally in particular at the rear end of the body (17).

10. An agricultural working machine (1), in particular a harvester, according to one of claims 7 to 9 **characterised in that** the detection system (20) is pivoted with the change in the steering position (5-7) in such a way that an angular position of the detection system (20) corresponds to an angular position of the steerable wheels (9).

11. An agricultural working machine (1), in particular a harvester, according to one of the preceding claims **characterised in that** it includes a trailer (2), wherein the detection system (20) is provided with at least one sensor (15) to permit sensor-supported coupling of the trailer (2) to the coupling device 19).

12. An agricultural working machine (1), in particular a harvester, according to claim 11 **characterised in that** a transmitter (14) or a reflector (28) is arranged on the trailer (2).

13. An agricultural working machine (1), in particular a harvester, according to claim 11 or claim 12 **characterised in that** a sensor (15) is arranged on the trailer (2), which is wirelessly connected to the detection system (20).

14. A method of coupling a trailer (2) to a tractor vehicle (1) according to at least one of the preceding claims **characterised in that** a detection system (20) is used, which operates in a contact-less manner and in angle-dependent relationship and the working angle (4) of which is adjustable and is coupled to a steering position (5-7) of the steering arrangement (8) of the tractor vehicle (1), wherein for sensor-supported coupling of the trailer (2) to the coupling device (19) the steering position (5-7) of the steering arrangement (8) is changed until the sensor (15) of the detection system (20) detects the trailer (2), the tractor vehicle (1) then being moved in the direction of the trailer (2).

15. A method of coupling a trailer (2) to a tractor vehicle (1) according to claim 14 **characterised in that** semi-automatic or automatic coupling is effected and the steering position (5-7) of the steering arrangement (8) is changed again when the sensor (15) no longer detects the trailer (2).

16. A method of coupling a trailer (2) to a tractor vehicle (1) according to claim 15 **characterised in that** a correction time or a correction angle is integrated and a renewed search process is started if a predetermined correction limit value is exceeded.

## Revendications

1. Machine de travail agricole (1), en particulier moissonneuse, comprenant un système de détection (20) avec au moins un capteur (15) afin de permettre l'accouplement assisté par capteur d'une remorque (2),
**caractérisée en ce que** le système de détection (20) travaille sans contact et en fonction de l'angle, l'angle de travail (4) du système de détection (20) étant réglable et pouvant être couplé à une position de direction (5-7) d'un mécanisme de direction (8) de la machine de travail (1).

2. Machine de travail agricole (1), en particulier moissonneuse, selon la revendication 1, **caractérisée en ce que** le dispositif de détection (20) est prévu de manière à pouvoir pivoter.

3. Machine de travail agricole (1), en particulier moissonneuse, selon la revendication 1 ou 2, **caractérisée en ce qu'**un émetteur (14) est prévu, lequel émet des signaux dirigés dans l'angle de travail (4).

4. Machine de travail agricole (1), en particulier moissonneuse, selon l'une quelconque des revendications précédentes, **caractérisée en ce que** le capteur (15) est sensible à la direction et détecte des signaux provenant de la direction de l'angle de travail réglé (4).

5. Machine de travail agricole (1), en particulier moissonneuse, selon l'une quelconque des revendications précédentes, **caractérisée en ce qu'**un capteur de distance est intégré.

6. Machine de travail agricole (1), en particulier moissonneuse, selon l'une quelconque des revendications précédentes, **caractérisée en ce que** deux systèmes de détection (20, 21) orientés parallèlement et disposés en déport latéral sont prévus.

7. Machine de travail agricole (1), en particulier moissonneuse, selon l'une quelconque des revendications précédentes, **caractérisée en ce qu'**elle comporte une carrosserie (17), un entraînement (18), plusieurs roues (9) et un dispositif d'accouplement (19) afin de permettre un accouplement assisté par capteur d'une remorque (2) au dispositif d'accouplement (19).

8. Machine de travail agricole (1), en particulier moissonneuse, selon la revendication 7, **caractérisée en ce que** les roues (9) sont réalisées comme des roues avant et arrière et les roues arrières étant prévues dirigeables.

9. Machine de travail agricole (1), en particulier moissonneuse, selon la revendication 7 ou 8, **caractérisée en ce que** le système de détection (20) est disposé au-dessous du dispositif d'accouplement (19) qui est disposé au milieu en particulier sur l'extrémité arrière de la carrosserie (17).

10. Machine de travail agricole (1), en particulier moissonneuse, selon l'une quelconque des revendications 7 à 9, **caractérisée en ce que** le système de détection (20) est pivoté avec la modification de la position de direction (5-7) de telle sorte qu'une position angulaire du système de détection (20) corresponde à une position angulaire des roues (9) dirigeables.

11. Machine de travail agricole (1), en particulier moissonneuse, selon l'une quelconque des revendications précédentes, **caractérisée en ce qu'**elle comporte une remorque (2), le système de détection (20) étant prévu avec au moins un capteur (15) afin de permettre un accouplement assisté par capteur de la remorque (2) au dispositif d'accouplement (19).

12. Machine de travail agricole (1), en particulier moissonneuse, selon la revendication 11, **caractérisée en ce qu'**un émetteur (14) ou un réflecteur (28) est disposé sur la remorque (2).

13. Machine de travail agricole (1), en particulier moissonneuse, selon la revendication 11 ou 12, **caractérisée en ce qu'**un capteur (15) est disposé sur la remorque (2), lequel est relié sans fil au système de détection (20).

14. Procédé d'accouplement d'une remorque (2) à un véhicule tracteur (1) selon au moins l'une quelconque des revendications précédentes, **caractérisé en ce qu'**un système de détection (20) est utilisé, lequel travaille sans contact et en fonction de l'angle et dont l'angle de travail (4) est réglable et est couplé à une position de direction (5-7) du mécanisme de direction (8) du véhicule tracteur (1), pour l'accouplement assisté par capteur de la remorque (2) au dispositif d'accouplement (19) étant modifiée la position de direction (5-7) du mécanisme de direction (8) jusqu'à ce que le capteur (15) du système de détection (20) détecte la remorque (2), le véhicule tracteur (1) étant ensuite déplacé en direction de la remorque (2).

15. Procédé d'accouplement d'une remorque (2) à un véhicule tracteur (1) selon la revendication 14, **caractérisé en ce qu'**un accouplement automatique ou semi-automatique est effectué et la position de direction (5-7) du mécanisme de direction (8) est de nouveau modifiée si le capteur (15) ne détecte plus la remorque (2).

16. Procédé d'accouplement d'une remorque (2) à un véhicule tracteur (1) selon la revendication 15, **caractérisé en ce qu'**un temps de correction ou un angle de correction est intégré et un nouveau processus de recherche est lancé au cas où une valeur limite de correction prédéterminée est dépassée.
